# EUROPÄISCHE PATENTSCHRIFT

(11) **EP 1 310 965 B1**
(45) Veröffentlichungstag und Bekanntmachung des Hinweises auf die Patenterteilung: **20.01.2016**
(21) Anmeldenummer: 02024713.6
(22) Anmeldetag: 06.11.2002
(51) Int. Cl.: B60T 13/68, B60T 8/36, H01F 7/16

(54) **Spulenanordnung für ein Ventilsteuergerät**
Coil assembly for a valve control apparatus
Ensemble d'enroulement pour un appareil de régulation de soupape

(30) Priorität: 07.11.2001 DE 10154563
(43) Veröffentlichungstag der Anmeldung: 14.05.2003
(73) Patentinhaber: Conti Temic Microelectronic GmbH, 90411 Nürnberg (DE)
(72) Erfinder: Hoffmann, Richard, Dipl.-Ing. (FH), 85080 Gaimersheim (DE); Kring, Willy, 85049 Ingolstadt (DE); Schlenker, Roberto, Dipl.-Ing. (FH), 85049 Ingolstadt (DE)

(56) Entgegenhaltungen:
- CH-A- 366 333
- US-A- 3 185 902
- US-A- 4 476 451
- US-A- 5 662 392
- US-B1- 6 489 870
- PATENT ABSTRACTS OF JAPAN Bd. 0102, Nr. 48 (E-431), 26. August 1986 (1986-08-26) & JP 61 077311 A (MATSUSHITA ELECTRIC WORKS LTD), 19. April 1986 (1986-04-19)

## Beschreibung

Die Erfindung betrifft eine Spulenanordnung für ein Ventilsteuergerät gemäß dem Oberbegriff des Patentanspruchs 1.

Eine herkömmliche Spulenanordnung für ein Ventilsteuergerät besteht aus einem Spulenkörper, einer darauf gewickelten Drahtanordnung und einem Spulenjoch. Der Spulenkörper besteht aus einem elektrisch isolierenden Kunststoff. Auf dem Spulenkörper befindet sich die Drahtanordnung bestehend aus einem spulenförmig gewickelten elektrisch leitenden Draht. Spulenkörper und Drahtanordnung bilden die Magnetspule aus. Diese Magnetspule dient zur Betätigung eines in den Spulenkörper ragenden Ventils, das im Innern des Spulenkörpers hin und her bewegt werden kann. Derartige Ventilsteuergeräte werden beispielsweise in Fahrzeugen zur Betätigung der Bremsventile benötigt. Zur Führung des magnetischen Flusses ist die Magnetspule von einem Spulenjoch umgeben, das sich bis ins Innere des Spulenkörpers erstrecken kann. Derartige Spulenanordnungen werden in einem Ventilsteuergerät einzeln oder zu mehreren zumindest teilweise fixiert. Diese Ventilsteuergeräte werden mit einer Hydraulikeinheit verbunden. In der Hydraulikeinheit sind die zu steuernden Ventile angeordnet. Beim Zusammensetzen von Hydraulikeinheit und Ventilsteuergerät werden die Ventile bzw. die Ventildome der Hydraulikeinheit in die Spulenkörper des Ventilsteuergeräts eingeführt.

Nachteilig bei solchen Spulenanordnungen für Ventilsteuergeräte ist es, dass die Hydraulikeinheit Aufbautoleranzen aufweist, die beim Aufbau und der Dimensionierung der Spulenanordnungen im Ventilsteuergerät mit berücksichtigt werden müssen, wie beispielweise Variationen der Ventildurchmesser, der in den Spulenkörper ragt und Variationen des Abstands zwischen zwei Ventilen. Aus diesem Grund muss entweder das Spulenjoch oder der Spulenkörper mit der Drahtanordnung beweglich aufgebaut werden, oder die Durchlassöffnung im Spulenkörper bzw. im Spulenjoch muss so groß dimensioniert werden, dass auch bei den ungünstigsten Toleranzen das Hydraulikbauelement auf das Ventilsteuergerät aufgesetzt und die Ventile bzw. Ventildome in den Spulenkörper eingeführt werden können. Diese Maßnahmen zum Toleranzausgleich bewirken jedoch entweder eine Verschlechterung des Magnetkreises, der beispielsweise durch zusätzliche Spulenwindungen kompensiert werden muss, oder durch einen hohen Montageaufwand, der ebenfalls zur Verteuerung des Ventilsteuergerätes führt.

Dokument US5662392 offenbart eine Spulenanordnung für ein Ventilsteuergerät mit einem in einem zylindrischen Holraum angeordnetem Ventildom und einem zwischen dem Spulenkörper und dem Ventildom gelagerten Rohr.

Aufgabe der Erfindung ist es, einen Spulenaufbau für Ventilsteuergeräte aufzuzeigen, mit dem ein Toleranzausgleich für den späteren Zusammenbau mit der Hydraulikeinheit kostengünstig realisierbar ist. Die Aufgabe wird dadurch gelöst, dass zwischen dem Spulenkörper und dem Ventil bzw. Ventildom eine radial beweglich gelagarte Lochscheibe angeordnet wird, deren Öffnung einen geringeren Durchmesser als der im Innern des Spulenkörpers zylinderförmige Hohlraum aufweist.

Der Vorteil der Erfindung ist die Verbesserung der Spuleneigenschaften. Ein weiterer Vorteil besteht darin, dass der Kosten- und der Montageaufwand gegenüber äquivalenten Aufbauten wesentlich geringer ist.

Vorteilhafte Weiterbildungen ergeben sich aus den Unteransprüchen. Hierbei weist das Spulenjoch an der von der Hydraulikeinheit abgewandten Seite eine Abdeckung auf, die bewirkt, dass beim Vergießen der Spulenanordnung die Beweglichkeit der Lochscheibe erhalten bleibt. Eine weitere vorteilhafte Ausbildung der Erfindung ergibt sich bei einem Spulenkörper, der eine Aussparung aufweist, in die die Lochscheibe eingelegt werden kann. Ferner können weitere Vorteile dadurch erzielt werden, dass die Lochscheibe als Spannring bzw. Spannrohr ausgebildet ist, der bzw. das sich nachgiebig dem Durchmesser des Ventildoms anpasst, wodurch weitere Aufbautoleranzen entfallen.

Die Erfindung soll nachfolgend anhand eines Ausführungsbeispiels und den Figuren näher erläutert werden. Es zeigen:
- **Figur 1:**: Seitenansicht einer Spulenanordnung im Schnitt.
- **Figur 2:**: Vorderansicht einer Spulenanordnung im Schnitt.

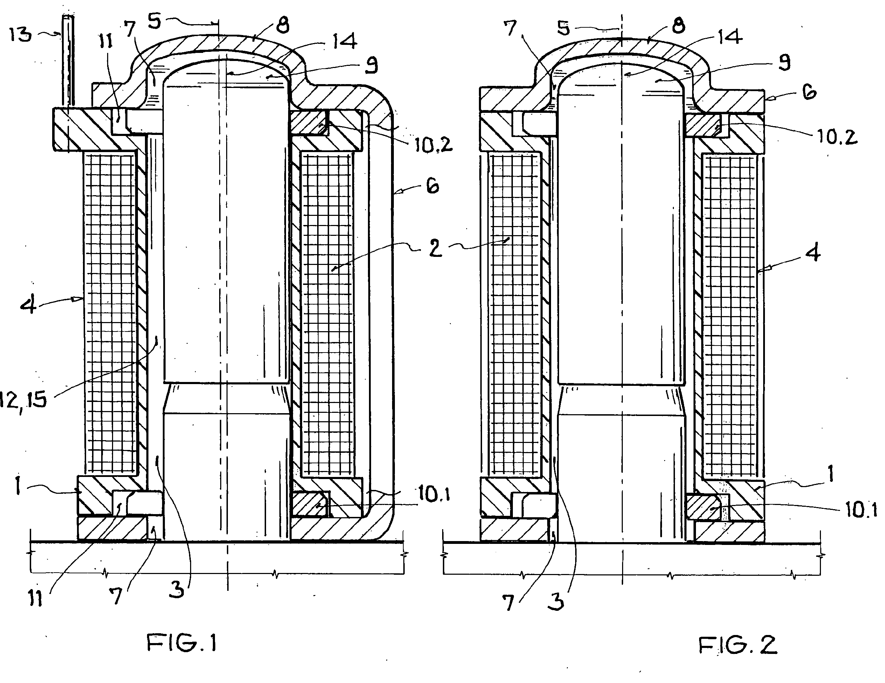

**Figur 1** zeigt eine Spulenanordnung in einer Schnittdarstellung aus der Seitenansicht. Die dargestellte Spulenanordnung besteht aus einem Spulenkörper **1,** auf dem die Drahtanordnung **2** aufgewickelt ist. Die Drahtanordnung **2** kann über Anschlussstifte **13** bestromt werden. Diese Komponenten **1, 2** bilden eine Magnetspule **4,** die beim Bestromen ein magnetisches Feld ausbildet, mit dem ein Ventil bzw. ein Ventildom **9,** der im Spulenhohlraum **12** angeordnet ist, bewegt werden kann. Aus diesem Grund muss das Ventil bzw. der Ventildom **9** aus einem magnetischen oder magnetisierbaren Material bestehen. Um die magnetische Dichte im Innern der Magnetspule **4** zu erhöhen und damit auch die magnetischen Kräfte, die auf den Ventildom **9** einwirken, wird die Magnetspule **4** mit einem Spulenjoch **6** versehen. Dieses Spulenjoch **6** dient zur Führung des magnetischen Flusses. Die Durchlassöffnungen **3** des Spulenkörpers **1** und die Durchlassöffnungen **7** des Spulenjochs **6** und der Spulenhohlraum **12** müssen so dimensioniert sein, dass alle Toleranzen des Hydraulikblocks (die Lagetoleranzen der Ventildome im Hydraulikblock, die Aufbautoleranzen der Ventildome) mit berücksichtigt sind. Aufgrund dieser Toleranzen ist zwischen dem Ventildom **9** und dem Spulenkörper **1** ein Luftspalt **15.** In diesem Ausführungsbeispiel ist an den beiden Stirnseiten des Spulenkörpers **1** ein Zwischenraum **11** ausgespart, in dem sich eine Lochscheibe **10** befindet. Hierbei ist die Lochscheibe **10** von den Außenabmessungen her kleiner als die Abmessungen des Zwischenraums **11.** Die Lochscheibe ist hierbei als beliebig rohrförmiges Teil anzusehen mit einem Durchlass, einem Loch oder einer Öffnung, die eine Umrandung aufweist. Ferner weist das Loch in der Lochscheibe **10** einen geringeren Durchmesser auf als die Durchlassöffnung des Spulenkörpers 1 bzw. des Spulenjochs **6** im Innern. Die Lochscheiben **10** werden zumindest teilweise vom Spulenjoch **6** abgedeckt und innerhalb der Umrandung des Durchlasses des Spulenjochs beweglich fixiert, wodurch sie in dem Zwischenraum **11** des Spulenkörpers **1** beweglich gehalten werden. Der Durchmesser der Öffnung in der Lochscheibe **10** ist so dimensioniert, dass er nur die Toleranzen des Ventil- bzw. des Ventildomdurchmessers berücksichtigt. Die Toleranzen des Abstands zwischen zwei Ventilen bzw. Ventildomen **9** müssen hierbei nicht mit berücksichtigt werden. Ferner stehen die Lochscheiben **10** in magnetischem Kontakt zum Spulenjoch **6.** Sie dienen als beweglicher Spulenjochbestandteil. Die beweglich gelagerte Lochscheibe **10** verringert den Zwischenraum des Ventildoms **9** im Spulenhohlraum **12** zum Spulenjoch. Die beweglich gelagerten Lochscheiben **10** ermöglichen auch Verschiebungen zum Toleranzausgleich bzgl. der Spulenachse **5** und der Ventildomachse **14.** Die Beweglichkeit der Lochscheibe **10** kann alternativ auch durch eine Aussparung im Spulenjoch **6** erzielt werden. Durch die Lochscheibe **10,** die einerseits die Positionsabweichung des Ventildoms zulässt und andererseits mit dem Spulenjoch in direktem magnetischen Kontakt steht, können die magnetischen Kräfte der Spule **4** besser auf den Ventildom **9** einwirken.

Ist die Lochscheibe **10** als Spannring ausgebildet, das heißt, weist die Lochscheibe **10** eine seitliche Öffnung auf, wodurch der Durchmesser der Lochscheibe bzw. eines Rohr verändert werden kann, so entfällt auch die Berücksichtigung der Toleranzen des Ventildurchmessers für die Dimensionierung der Lochscheibe. Ein solcher nachgiebiger Spannring **10** passt sich an die entsprechenden Ventilabmessungen **9** an. Bei einem solchen Aufbau ist eine hohe Passgenauigkeit gewährleistet. Dadurch können die magnetischen Eigenschaften der Spulenanordnung verbessert werden. Durch die exakte Führung verringert sich der Verschleiß einer solchen Anordnung und der Geräuschpegel wird reduziert.

**Figur 2** zeigt dieselbe Spulenanordnung in einer Schnittdarstellung aus der Vorderansicht. In dieser Abbildung wird deutlich, dass die Lochscheibe **10** um die Achse des Spulenkörpers bzw. des Spulenjochs beweglich angeordnet ist. Diese Beweglichkeit dient dazu, die Lagetoleranzen der Ventildome im Hydraulikblock auszugleichen. Die Aufbauabmessungen der einzelnen Ventildome mitsamt den Toleranzen werden beim Lochdurchmesser der Lochscheibe **10** mit berücksichtigt oder aber die Lochscheibe bzw. das Rohr wird als nachgiebiger Spannring bzw. Spannrohr ausgebildet, dessen Durchmesser verändert werden kann und damit das Ventil bzw. den Ventildom **9** immer passend umschließt. Anstatt dem Aufbau mit zwei Lochscheiben bzw. zwei Spannringen, wie abgebildet, kann ein Aufbau auch mit nur einer Lochscheibe oder nur einem Spannring oder einer Lochscheibe und einem Spannring erfolgen.

Derartige Anordnungen erlauben eine exakte Führung des Ventildoms **9** und damit auch des Ventils im Hohlraum **12** der Magnetspule **4.**

Bei dem dargestellten Spulenaufbau ist es unwesentlich, welche Geometrien das Spulenjoch **6** aufweist. Das Spulenjoch könnte alternativ auch becherförmig ausgeformt sein oder im einfachsten Fall als Platte, Zylinder oder Scheibe an einer Stirnseite der Magnetspule **4** angeordnet sein. Die Lochscheibe **10** ist als bewegliches Teil des ansonsten starren Spulenjochs anzusehen. Zweck dieses beweglichen Bestandteiles **10** des starren Spulenjochs **6** ist es, das Ventilspiel bzw. das Spiel des Ventildoms **9** im Spulenjoch **6** zu verringern, um die magnetischen Eigenschaften im Spulenjoch **6** zu verbessern. Eine solche Anordnung kann auch vergossen werden, wenn Abdichtungen vorgesehen sind, die ein Eindringen der Vergussmasse in den Zwischenraum **11** zwischen Spulenkörper **1** und Spulenjoch **6** verhindern. Zusätzlich kann das Spulenjoch **6** mit einer Abdeckung **8** versehen werden, die verhindert, dass die Vergussmasse die Lochscheibe **10** fixiert. Ferner muss die Abdeckung **8** so ausgestaltet sein, dass das Ventil innerhalb der Abdeckung bewegt werden kann.

## Patentansprüche

1. Spulenanordnung für ein Ventilsteuergerät, bestehend aus
- einem Spulenkörper (1), der im Innern einen zylinderförmigen Hohlraum (12) aufweist und im Außenbereich mit einer Drahtanordnung (2) umwickelt ist,
- einem im zylindrischen Hohlraum (12) angeordnetem Ventil bzw. Ventildom (9) und
- einem Spulenjoch (6),
**dadurch gekennzeichnet, dass**
zwischen dem Spulenkörper (1) und dem Ventil bzw. Ventildom (9) eine radial beweglich gelagerte Lochscheibe (10) angeordnet ist, deren Öffnung einen geringeren Durchmesser aufweist als der zylinderförmige Hohlraum (12).

2. Spulenanordnung für ein Ventilsteuergerät nach Patentanspruch 1, **dadurch gekennzeichnet, dass** die Lochscheibe (10) magnetische Eigenschaften aufweist.

3. Spulenanordnung für ein Ventilsteuergerät nach Patentanspruch 1, **dadurch gekennzeichnet, dass** der Spulenkörper (1) eine Aussparung (11) aufweist, in der sich die Lochscheibe (10) befindet.

4. Spulenanordnung für ein Ventilsteuergerät nach Patentanspruch 1,
**dadurch gekennzeichnet, dass** das Spulenjoch (6) eine Aussparung (11) aufweist, in der sich die Lochscheibe (10) befindet.

5. Spulenanordnung für ein Ventilsteuergerät nach Patentanspruch 1,
**dadurch gekennzeichnet, dass** die Lochscheibe (10) als nachgiebiger Spannring ausgebildet ist.

## Claims

1. A coil assembly for a valve control unit, consisting of
- a coil body (1) which has a cylindrical cavity (12) on the inside and is surrounded by a wire assembly (2) on the outside,
- a valve or valve dome (9) arranged in the cylindrical cavity (12), and
- a coil yoke (6),
**characterized in that**
between the coil body (1) and the valve or valve dome (9), a perforated disc (10) is arranged which is supported so as to be radially movable and the opening of which has a smaller diameter than the cylindrical cavity (12).

2. The coil assembly for a valve control unit according to Claim 1, **characterized in that** the perforated disc (10) has magnetic properties.

3. The coil assembly for a valve control unit according to Claim 1, **characterized in that** the coil body (1) has a recess (11) where the perforated disc (10) is located.

4. The coil assembly for a valve control unit according to Claim 1, **characterized in that** the coil yoke (6) has a recess (11) where the perforated disc (10) is located.

5. The coil assembly for a valve control unit according to Claim 1, **characterized in that** the perforated disc (10) is designed as a flexible clamping ring.

## Revendications

1. Dispositif de bobine pour un appareil de commande de soupape, comprenant
- un corps de bobine (1), à l'intérieur duquel est formée une cavité cylindrique (12) et entouré extérieurement par un enroulement de fil (2),
- une soupape ou une cloche de soupape (9) disposée dans la cavité cylindrique (12), et
- une culasse de bobine (6),
**caractérisé**
**en ce qu**'une rondelle perforée (10) montée de manière radialement mobile est disposée entre le corps de bobine (1) et la soupape ou la cloche de soupape (9), dont l'ouverture a un diamètre inférieur à celui de la cavité cylindrique (12).

2. Dispositif de bobine pour un appareil de commande de soupape selon la revendication 1, **caractérisé en ce que** la rondelle perforée (10) a des propriétés magnétiques.

3. Dispositif de bobine pour un appareil de commande de soupape selon la revendication 1, **caractérisé en ce que** le corps de bobine (1) présente un évidement (11) où est logée la rondelle perforée (10).

4. Dispositif de bobine pour un appareil de commande de soupape selon la revendication 1, **caractérisé en ce que** la culasse de bobine (6) présente un évidement (11) où est logée la rondelle perforée (10).

5. Dispositif de bobine pour un appareil de commande de soupape selon la revendication 1, **caractérisé en ce que** la rondelle perforée (10) est réalisée comme bague de serrage flexible.
